# EUROPEAN PATENT APPLICATION

(11) **EP 2 835 744 A1**
(43) Date of publication of application: **11.02.2015**
(21) Application number: 13880550.2
(22) Date of filing: 26.09.2013
(51) Int. Cl.: G06F 13/38, G06K 19/00

(54) **STORAGE CARD AND METHOD FOR STORING DATA**

(30) Priority: 26.03.2013 CN 201310101233
(71) Applicant: Huawei Technologies Co., Ltd., Shenzhen, Guangdong 518129 (CN)
(72) Inventor: LU, Haizhao, Shenzhen Guangdong 518129 (CN); RONG, Qingan, Shenzhen Guangdong 518129 (CN); YUAN, Qin, Shenzhen Guangdong 518129 (CN)
(74) Representative: Körber, Martin Hans
(86) International application number: PCT/CN2013/084247
(87) International publication number: WO 2014/153935

(57) **Abstract**

The present invention provides a memory card and a data storage method. The memory card includes: a wireless power supply module, configured to obtain first power from a first wireless external device in a first time period; a contact-type power supply module, configured to obtain second power from a first contact-type external device in a second time period; a wireless communications module, connected to the wireless power supply module, and configured to perform wireless communication with the first wireless external device by using ultra-wideband impulse radio in the first time period, to transmit a first read/write instruction; a contact-type communications module, connected to the contact-type power supply module, and configured to perform contact-type communication with the first contact-type external device in the second time period, to transmit a second read/write instruction; and a storage control module, connected to the wireless power supply module, the wireless communications module, the contact-type power supply module, and the contact-type communications module, and configured to read or write data corresponding to the first read/write instruction in the first time period and read or write data corresponding to the second read/write instruction in the second time period.

## Description

### CROSS-REFERENCE TO RELATED APPLICATION

This application claims priority to Chinese Patent Application No. 201310101233.6, filed with the Chinese Patent Office on March 26, 2013 and entitled "MEMORY CARD AND DATA STORAGE METHOD", which is incorporated herein by reference in its entirety.

### TECHNICAL FIELD

The present invention relates to the communications field, and in particular, to a memory card and a data storage method applicable to the memory card.

### BACKGROUND

With popularity of intelligent terminals (such as smartphones and tablet computers), data often needs to be transmitted between an intelligent terminal and a memory card (which may be installed in the intelligent terminal).

It is known in the prior art that, an intelligent terminal (hereinafter referred to as a conventional terminal for ease of distinction) reads or writes data in a memory card (hereinafter referred to as a conventional memory card for ease of understanding and distinction) by using a contact-type interface, for example a Universal Serial Bus (USB, Universal Serial BUS) interface.

To improve a transmission speed and user experience, a technology for implementing wireless transmission between an intelligent terminal and a memory card by using ultra-wideband impulse radio is provided. That is, a transmission module for transmitting data by using the ultra-wideband impulse radio, a wireless power supply module, and a wireless power receiving module are placed in the intelligent terminal and a memory card (hereinafter referred to as a novel memory card for ease of understanding and distinction), so as to implement high-speed wireless reading/writing. The novel memory card capable of wireless communication is considered as a main development direction of future memory cards because a read/write operation is simple, convenient and fast. However, a conventional intelligent terminal cannot use the wireless power supply and communications technologies to read or write data in the novel memory card, which seriously restricts development of the ultra-wideband impulse radio technology and the novel memory card using the technology.

### SUMMARY

Embodiments of the present invention provide a memory card and a data storage method, so as to expand an application scope of the memory card.

According to a first aspect, a memory card is provided, where the memory card includes: a wireless power supply module, configured to receive wireless power supply from a first wireless external device in a first time period, to obtain first power; a contact-type power supply module, configured to receive contact-type power supply from a first contact-type external device in a second time period, to obtain second power; a wireless communications module, connected to the wireless power supply module, and configured to perform wireless communication with the first wireless external device by using ultra-wideband impulse radio and by using the first power in the first time period, to transmit a first read/write instruction from the first wireless external device and first data that needs to be read or written according to the first read/write instruction; a contact-type communications module, connected to the contact-type power supply module, and configured to perform contact-type communication with the first contact-type external device by using the second power in the second time period, to transmit a second read/write instruction from the first contact-type external device and second data that needs to be read or written according to the second read/write instruction; and a storage control module, connected to the wireless power supply module, the wireless communications module, the contact-type power supply module, and the contact-type communications module, and configured to read or write the first data from or into a storage medium according to the first read/write instruction by using the first power in the first time period, and read or write the second data from or into the storage medium according to the second read/write instruction by using the second power in the second time period.

With reference to the first aspect, in a first implementation manner of the first aspect, the contact-type power supply module is further configured to receive contact-type power supply from a second contact-type external device in the first time period, to obtain third power.

With reference to the first aspect and the foregoing implementation manner thereof, in a second implementation manner of the first aspect, the storage control module is further configured to read or write the first data from or into the storage medium according to the first read/write instruction by using the third power in the first time period.

With reference to the first aspect and the foregoing implementation manners thereof, in a third implementation manner of the first aspect, the storage control module is further configured to: when the first power and the third power are detected at the same time and the third power reaches a preset first threshold, determine to read or write the first data from or into the storage medium according to the first read/write instruction by using the third power in the first time period.

With reference to the first aspect and the foregoing implementation manners thereof, in a fourth implementation manner of the first aspect, the wireless communications module is further connected to the contact-type power supply module, and is further configured to perform wireless communication with the first wireless external device by using the ultra-wideband impulse radio and by using the third power in the first time period, to transmit the first read/write instruction and the first data.

With reference to the first aspect and the foregoing implementation manners thereof, in a fifth implementation manner of the first aspect, the storage control module is further configured to: when the first power and the third power are detected at the same time and the third power reaches the preset first threshold, instruct the wireless communications module to perform wireless communication with the first wireless external device by using the ultra-wideband impulse radio and by using the third power, to transmit the first read/write instruction and the first data.

With reference to the first aspect and the foregoing implementation manners thereof, in a sixth implementation manner of the first aspect, the storage control module is further configured to: when the first power and the third power are detected at the same time and the third power reaches the preset first threshold, prohibit the wireless power supply module from receiving the wireless power supply from the first wireless external device in the first time period.

With reference to the first aspect and the foregoing implementation manners thereof, in a seventh implementation manner of the first aspect, the storage control module is further configured to: if the first power is first detected in the first time period, prohibit the contact-type communications module from performing contact-type communication with the second contact-type external device in the first time period.

With reference to the first aspect and the foregoing implementation manners thereof, in an eighth implementation manner of the first aspect, the wireless power supply module is further configured to receive wireless power supply from a second wireless external device in the second time period, to obtain fourth power.

With reference to the first aspect and the foregoing implementation manners thereof, in a ninth implementation manner of the first aspect, the storage control module is further configured to read or write the second data from or into the storage medium according to the second read/write instruction by using the fourth power in the second time period.

With reference to the first aspect and the foregoing implementation manners thereof, in a tenth implementation manner of the first aspect, the contact-type communications module is further connected to the wireless power supply module, and is further configured to perform contact-type communication with the first contact-type external device by using the fourth power in the second time period, to transmit the second read/write instruction and the second data.

With reference to the first aspect and the foregoing implementation manners thereof, in an eleventh implementation manner of the first aspect, the storage control module is further configured to: if the second power is first detected in the second time period, prohibit the wireless communications module from performing wireless communication with the second wireless external device by using the ultra-wideband impulse radio in the second time period.

With reference to the first aspect and the foregoing implementation manners thereof, in a twelfth implementation manner of the first aspect, the storage control module is further configured to: when receiving a third read/write instruction from an external device except the first wireless external device before completing reading or writing data corresponding to the first read/write instruction, after completing reading or writing data corresponding to the first read/write instruction, read or write data according to the third read/write instruction; or pause reading or writing data corresponding to the first read/write instruction, and continue reading or writing data corresponding to the third read/write instruction after completing reading or writing data corresponding to the third read/write instruction; or cancel reading or writing data corresponding to the first read/write instruction, and read or write data according to the third read/write instruction; or send a first operation instruction request to the first wireless external device, receive a first operation instruction response sent by the first wireless external device, and read or write data according to the first operation instruction response.

With reference to the first aspect and the foregoing implementation manners thereof, in a thirteenth implementation manner of the first aspect, the storage control module is further configured to: when receiving a third read/write instruction from an external device except the first wireless external device before completing reading or writing data corresponding to the first read/write instruction, after completing reading or writing data corresponding to the first read/write instruction, read or write data according to the third read/write instruction; or pause reading or writing data corresponding to the first read/write instruction, and continue reading or writing data corresponding to the third read/write instruction after completing reading or writing data corresponding to the third read/write instruction; or cancel reading or writing data corresponding to the first read/write instruction, and read or write data according to the third read/write instruction; or send a first operation instruction request to the first wireless external device, receive a first operation instruction response sent by the first wireless external device, and read or write data according to the first operation instruction response.

With reference to the first aspect and the foregoing implementation manners thereof, in a fourteenth implementation manner of the first aspect, the contact-type power supply module and the contact-type communications module can be connected to the contact-type external device by using at least one interface, and the at least one interface includes: a secure digital SD memory card interface, a compact flash CF card interface, a multimedia card MMC interface, a Universal Serial Bus USB interface, a 1394 interface, a subscriber identity module SIM card interface, a user identity module UIM card interface, and a universal subscriber identity module USIM card interface.

According to a second aspect, a data storage method is provided, where the method includes: receiving wireless power supply from a first wireless external device in a first time period, to obtain first power; performing wireless communication with the first wireless external device by using ultra-wideband impulse radio and by using the first power in the first time period, to transmit a first read/write instruction from the first wireless external device and first data that needs to be read or written according to the first read/write instruction; reading or writing the first data from or into a storage medium according to the first read/write instruction by using the first power in the first time period; receiving contact-type power supply from a first contact-type external device in a second time period, to obtain second power; performing contact-type communication with the first contact-type external device by using the second power in the second time period, to transmit a second read/write instruction from the first contact-type external device and second data that needs to be read or written according to the second read/write instruction; and reading or writing the second data from or into the storage medium according to the second read/write instruction by using the second power in the second time period.

With reference to the second aspect, in a first implementation manner of the second aspect, the method further includes: receiving contact-type power supply from a second contact-type external device in the first time period, to obtain third power.

With reference to the second aspect and the foregoing implementation manner thereof, in a second implementation manner of the second aspect, the performing wireless communication with the first wireless external device by using ultra-wideband impulse radio and by using the first power in the first time period includes: performing wireless communication with the first wireless external device by using the ultra-wideband impulse radio and by using the third power in the first time period.

With reference to the second aspect and the foregoing implementation manners thereof, in a third implementation manner of the second aspect, the performing wireless communication with the first wireless external device by using the ultra-wideband impulse radio and by using the third power in the first time period includes: when the first power and the third power are detected at the same time and the third power reaches a preset first threshold, performing wireless communication with the first wireless external device by using the ultra-wideband impulse radio and by using the third power in the first time period, to transmit the first read/write instruction and the first data.

With reference to the second aspect and the foregoing implementation manners thereof, in a fourth implementation manner of the second aspect, the reading or writing the first data from or into a storage medium according to the first read/write instruction by using the first power in the first time period includes: reading or writing the first data from or into the storage medium according to the first read/write instruction by using the third power in the first time period.

With reference to the second aspect and the foregoing implementation manners thereof, in a fifth implementation manner of the second aspect, the reading or writing the first data from or into the storage medium according to the first read/write instruction by using the third power in the first time period includes: when the first power and the third power are detected at the same time and the third power reaches the preset first threshold, reading or writing the first data from or into the storage medium according to the first read/write instruction by using the third power in the first time period.

With reference to the second aspect and the foregoing implementation manners thereof, in a sixth implementation manner of the second aspect, the method further includes: when the first power and the third power are detected at the same time and the third power reaches the preset first threshold, prohibiting the wireless power supply from the first wireless external device from being received in the first time period.

With reference to the second aspect and the foregoing implementation manners thereof, in a seventh implementation manner of the second aspect, the method further includes: if the first power is first detected in the first time period, prohibiting the contact-type communication from being performed with the second contact-type external device in the first time period.

With reference to the second aspect and the foregoing implementation manners thereof, in an eighth implementation manner of the second aspect, the method further includes: receiving wireless power supply from a second wireless external device in the second time period, to obtain fourth power.

With reference to the second aspect and the foregoing implementation manners thereof, in a seventh implementation manner of the second aspect, the performing contact-type communication with the first contact-type external device by using the second power in the second time period includes: performing contact-type communication with the first contact-type external device by using the fourth power in the second time period.

With reference to the second aspect and the foregoing implementation manners thereof, in a seventh implementation manner of the second aspect, the reading or writing the second data from or into the storage medium according to the second read/write instruction by using the second power in the second time period includes: reading or writing the second data from or into the storage medium according to the second read/write instruction by using the fourth power in the second time period.

With reference to the second aspect and the foregoing implementation manners thereof, in a seventh implementation manner of the second aspect, the method further includes: if the second power is first detected in the second time period, prohibiting the wireless communication from being performed with the second wireless external device by using the ultra-wideband impulse radio in the second time period.

With reference to the second aspect and the foregoing implementation manners thereof, in a seventh implementation manner of the second aspect, if a third read/write instruction from an external device except the first wireless external device is received before data reading/writing corresponding to the first read/write instruction is completed, the reading or writing the first data from or into a storage medium according to the first read/write instruction includes: after completing reading or writing data corresponding to the first read/write instruction, performing data reading/writing according to the third read/write instruction; or pausing reading or writing data corresponding to the first read/write instruction, and continue reading or writing data corresponding to the third read/write instruction after completing reading or writing data corresponding to the third read/write instruction; or canceling reading or writing data corresponding to the first read/write instruction, and performing data reading/writing according to the third read/write instruction; or sending a first operation instruction request to the first wireless external device, receiving a first operation instruction response sent by the first wireless external device, and performing data reading/writing according to the first operation instruction response.

With reference to the second aspect and the foregoing implementation manners thereof, in a seventh implementation manner of the second aspect, if a fourth read/write instruction from an external device except the first contact-type external device is received before data reading/writing corresponding to the second read/write instruction is completed, the reading or writing the second data from or into the storage medium according to the second read/write instruction includes: after completing reading or writing data corresponding to the second read/write instruction, performing data reading/writing according to the fourth read/write instruction; or pausing reading or writing data corresponding to the second read/write instruction, and continue reading or writing data corresponding to the second read/write instruction after completing reading or writing data corresponding to the fourth read/write instruction; or canceling reading or writing data corresponding to the second read/write instruction, and performing data reading/writing according to the fourth read/write instruction; or sending a second operation instruction request to the first contact-type external device, receiving a second operation instruction response sent by the first contact-type external device, and performing data reading/writing according to the second operation instruction response.

In a memory card and a data storage method according to the embodiments of the present invention, the memory card has a wireless communications module and a contact-type communications module, and can transmit data to various terminal devices including a novel intelligent terminal that reads/writes data by using ultra-wideband impulse radio and a conventional terminal that reads/writes data by using contact-type communication, to implement data reading/writing, so as to expand an application scope of the memory card, that is, to facilitate promotion and popularity of the ultra-wideband impulse radio transmission technology, and ensure use of a conventional intelligent terminal. Furthermore, data from the wireless communications module and data from the contact-type communications module are stored in a same storage control module, so that a same storage space can be used for data reading/writing of both a novel intelligent terminal and a conventional intelligent terminal in different time periods, so as to implement data exchange between the novel intelligent terminal and the conventional intelligent terminal, thereby improving user experience.

### BRIEF DESCRIPTION OF DRAWINGS

To describe the technical solutions in the embodiments of the present invention more clearly, the following briefly introduces the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.
FIG. 1 is a schematic block diagram of a memory card according to an embodiment of the present invention;
FIG. 2 is a schematic block diagram of a memory card according to another embodiment of the present invention;
FIG. 3 is a schematic block diagram of a memory card according to still another embodiment of the present invention; and
FIG. 4 is a schematic process of a data storage method according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by a person of ordinary skill in the art based on the embodiments of the present invention without creative efforts shall fall within the protection scope of the present invention.

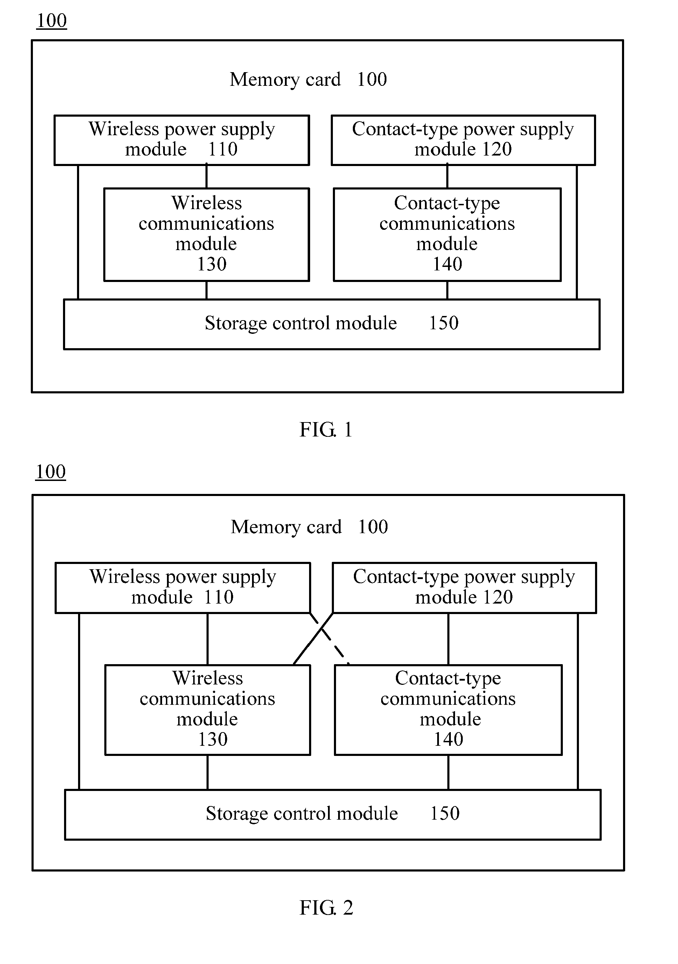

FIG. 1 is a schematic block diagram of a memory card 100 according to an embodiment of the present invention, and as shown in FIG. 1, the memory card 100 includes:
a wireless power supply module 110, configured to receive wireless power supply from a wireless external device, to obtain power, and specifically configured to receive wireless power supply from a first wireless external device in a first time period, to obtain first power;
a contact-type power supply module 120, configured to receive contact-type power supply from a first contact-type external device in a second time period, to obtain second power;
a wireless communications module 130, connected to the wireless power supply module 110, and configured to perform wireless communication with the first wireless external device by using ultra-wideband impulse radio and by using the first power in the first time period, to transmit a first read/write instruction from the first wireless external device and first data that needs to be read or written according to the first read/write instruction;
a contact-type communications module 140, connected to the contact-type power supply module 120, and configured to perform contact-type communication with the first contact-type external device by using the second power in the second time period, to transmit a second read/write instruction from the first contact-type external device and second data that needs to be read or written according to the second read/write instruction; and
a storage control module 150, connected to the wireless power supply module 110, the wireless communications module 130, the contact-type power supply module 120, and the contact-type communications module 140, and configured to read or write the first data from or into a storage medium according to the first read/write instruction by using the first power in the first time period, and
read or write the second data from or into the storage medium according to the second read/write instruction by using the second power in the second time period.

In the following, functions of modules of this embodiment of the present invention are described first.

In this embodiment of the present invention, a wireless power supply technology may be adopted in the wireless power supply module 110 to receive wireless power supply from an external device (for example, the first wireless external device or a second wireless external device). According to the wireless power supply technology, a non-radiative wireless energy transfer manner may be used to supply power (or in other words, perform driving), that is, a non-radioactive field may be used to gather energy borne by electromagnetic waves in the space (for example, most electromagnetic waves scattered in the air during transmission of radio broadcasting). Energy (or in other words, vibration) is transferred between the wireless power supply module 110 and an external device by using same natural frequencies. In this embodiment of the present invention, the wireless power supply module 110 may implement the wireless power supply by using various manners such as electric field coupling, magnetic field coupling, photoelectric coupling, and electromagnetic resonance.

It should be noted that, in this embodiment of the present invention, the shape and size of the wireless power supply module 110 may be arbitrarily configured according to requirements, as long as the wireless power supply can be implemented, and the present invention imposes no specific limitation.

In this embodiment of the present invention, after being powered on (for example, receiving power supply from the wireless power supply module 110 or the contact-type power supply module 120), the wireless communications module 130 can transmit data by using an ultra-wideband impulse radio (UWB, Ultra-Wideband) communications technology. UWB wireless communications is a method that performs communication by using impulses at very short time intervals (less than 1 ns) and is carrier-free. The UWB wireless communications is also referred to as impulse radio (Impulse Radio), time domain (Time Domain), or carrier-free (Carrier Free) communications. Compared with a common binary phase shift keying signal waveform, the UWB wireless communications does not use a cosine wave to perform carrier modulation, but sends a lot of impulses less than 1 ns, so that this type of communication manner occupies a very large bandwidth, and because spectral power density is very low, it has features of common spread spectrum communications. The UWB wireless communications uses non-sinusoidal narrow impulses ranging from nanoseconds to picoseconds to transmit data. By transmitting a signal of extremely low power on a wide spectrum, UWB can achieve a data transmission rate of hundreds of Mbit/s or even several Gbit/s within a range of about 10 meters. UWB has many advantages such as high anti-interference performance, a high transmission rate, an extremely wide bandwidth, low power consumption, and low transmit power.

It should be noted that, in this embodiment of the present invention, the shape and size of the wireless communications module 130 may be arbitrarily configured according to requirements, as long as the UWB wireless communications can be implemented, and the present invention imposes no specific limitation.

Optionally, in this embodiment of the present invention, the contact-type power supply module and the contact-type communications module can be connected to the contact-type external device by using at least one interface, and the at least one interface includes:
a secure digital SD memory card interface, a compact flash CF card interface, a multimedia card MMC interface, a Universal Serial Bus USB interface, a 1394 interface, a subscriber identity module SIM card interface, a user identity module UIM card interface, and a universal subscriber identity module USIM card interface.

Specifically, in this embodiment of the present invention, the contact-type power supply module 120 can be electrically connected to an external device by using various physical interfaces such as a user identity module (UIM, User Identity Module) card interface, a universal subscriber identity module (USIM, Universal Subscriber Identity Module) card interface, a secure digital memory card (SD, Secure Digital Memory Card) interface, a compact flash (CF, Compact Flash) card interface, a multimedia card (MMC, Multimedia Card) interface, a subscriber identity module (SIM, Subscriber Identity Module) card interface, and a Universal Serial Bus (USB, Universal Serial BUS) interface, and obtain power from the external device.

Similarly, after being powered on (for example, receiving the power supply from the wireless power supply module 110 or the contact-type power supply module 120), the contact-type communications module 140 can be in communication connection with the external device by using one or more interfaces among the foregoing interfaces, to transmit data and signaling to the external device.

In this embodiment of the present invention, after being powered on, the storage control module 150 may receive a read/write instruction from the contact-type communications module 140 and the wireless communications module 130, and may perform a data reading/writing operation in the storage medium according to the read/write instruction. In this embodiment of the present invention, a method and a process of reading/writing data according to the read/write instruction are similar to those in the prior art, and are not described here to avoid repetition.

Optionally, the contact-type power supply module is further configured to receive contact-type power supply from a second contact-type external device in the first time period, to obtain third power.

Furthermore, the storage control module is further configured to read or write the first data from or into the storage medium according to the first read/write instruction by using the third power in the first time period.

Optionally, the wireless power supply module is further configured to receive wireless power supply from a second wireless external device in the second time period, to obtain fourth power.

Furthermore, the storage control module is further configured to read or write the second data from or into the storage medium according to the second read/write instruction by using the fourth power in the second time period.

Specifically, in this embodiment of the present invention, the storage control module 150 is electrically connected to two power supply modules, namely the contact-type power supply module 120 and the wireless power supply module 110, so that, for example, when receiving power supply from an external device A (an example of the first wireless external device) by using the wireless power supply module 110 to perform a data reading/writing operation for the external device A, the storage control module 150 can receive power supply from an external device B (an example of the second contact-type external device). In this case, the storage control module 150 may perform the data reading/writing operation by using power provided by the external device A or power provided by the external device B.

Therefore, for the storage control module 150, the contact-type power supply module 120 and the wireless power supply module 110 may work in an active/standby mode, that is, the storage control module 150 may use any one of the contact-type power supply module 120 and the wireless power supply module 110 as an active power supply module, and use the other module as a standby power supply module, so as to further ensure data reading/writing of the storage control module 150, and improve reliability of the memory card of the present invention.

In a method for selecting the active power supply module, for example, when the data reading/writing operation for the external device A is being performed, and in a case in which the power supply from the external device B is obtained in a reading/writing process, the wireless power supply module 110 that obtains the power from the external device A may be used as the active power supply module.

In the foregoing case, the storage control module 150 may use the power provided by the external device A instead of using the power provided by the external device B. Data for the external device A is read/written, and therefore a possibility of actively removing the power supply by the external device A is low before data reading/writing is completed. Therefore, performing of the data reading/writing operation can be ensured.

It should be noted that, in this embodiment of the present invention, because there are two communications modules, namely the receiving contact-type communications module 140 and the wireless communications module 130, there may be a case in which the storage control module 150 performs a data reading/writing process for an external device and receives a read/write instruction from another device at the same time. Therefore, the storage control module 150 in this embodiment of the present invention may further be capable of logic switching. A process of the logic switching (a data storage operation) is described in detail later.

In addition, in this embodiment of the present invention, because there are two power supply modules, namely the contact-type power supply module 120 and the wireless power supply module 110, there is a case in which the two power supply modules supply power to multiple modules including the storage control module 150 (for example, the wireless communications module 130 in a case in which the wireless communications module 130 is connected to the contact-type power supply module 120) at the same time. Therefore, the storage control module 150 in this embodiment of the present invention may further have a power rectification function. A process of the power rectification is described in detail later.

In this embodiment of the present invention, the storage medium configured to store data may be, for example, mature storage media in the art such as a random access memory, a flash memory (Flash Memory), a read-only memory, a programmable read only memory or an electrically erasable programmable memory, a register, and a non-volatile random access memory (NVRAM), and the present invention imposes no specific limitation.

The memory card 100 of the present invention may be installed in, for example, various intelligent terminals such as a mobile phone and a tablet computer. For example, the memory card 100 may be manufactured to have the same shape and size as those of a general SIM card, physical interfaces of the contact-type power supply module 120 and the contact-type communications module 140 are manufactured to have the same structure and shape as those of a physical interface of an existing SIM, and other parts, the wireless power supply module 110, the wireless communications module 130, and the storage control module 150 are integrated in a part, of the SIM, except the physical interface. It should be understood that, the shape and manufacturing method of the memory card 100 that are listed above are only for exemplary description, but the present invention is not limited thereto, other memories that have the structure and function of the memory card 100 of the present invention all fall within the protection scope of the present invention, and for example, the memory card 100 of the present invention may further be applied to manufacturing of a UIM card, a USIM card, an SD card, a CF card, and an MMC card.

For another example, the memory card 100 of the present invention may be used independently, the physical interfaces of the contact-type power supply module 120 and the contact-type communications module 140 of the memory card 100 of the present invention may be manufactured to have the same function, shape, and size as those of, for example, a Universal Serial Bus (USB, Universal Serial BUS) interface. Therefore, the memory card 100 may be connected, by using the USB interface, to an intelligent terminal device having a USB interface, such as a personal computer (PC, Personal Computer), so as to implement contact-type data reading/writing.

Furthermore, in a case in which the contact-type power supply module 120 and the contact-type communications module 140 use, for example, the USB interface as a physical interface to connect to an external device, multiple USB interfaces may also be disposed. The present invention imposes no specific limitation.

It should be noted that, in this embodiment of the present invention, the wireless external device refers to an external device capable of performing the UWB wireless communication (that is, a novel intelligent terminal), and the contact-type external device refers to an external device capable of performing contact-type communication (that is, a conventional intelligent terminal). Furthermore, the wireless external device may also have a contact-type communication function, similarly the contact-type external device may also have a function of performing the UWB wireless communication, and the present invention imposes no specific limitation.

In addition, in this embodiment of the present invention, the storage control module 150 may control actions of the wireless power supply module 110, the wireless communications module 120, the contact-type power supply module 130, and the contact-type communications module 140, that is, after being powered on, the storage control module 150 may control actions, such as enabling and disabling, of the wireless power supply module 110, the wireless communications module 120, the contact-type power supply module 130, and the contact-type communications module 140 according to a prestored program.

In this way, the storage control module 150 uniformly controls the actions of the modules, so that by designing the storage control module 150, the function or storage process of the whole memory card can be managed or changed, thereby facilitating designing and management, improving practicality of the memory card 100 of the present invention, and facilitating implementation.

Connection structures of the modules in this embodiment of the present invention are described below.

### Structure 1

As shown in FIG. 1, in this embodiment of the present invention, the contact-type power supply module 120 may be electrically connected to the contact-type communications module 140 and the storage control module 150 (in other words, the contact-type power supply module 120 may supply power to the contact-type communications module 140 and the storage control module 150), and the contact-type communications module 140 is in communication connection with the storage control module 150 (in other words, the contact-type communications module 140 can communicate with the storage control module 150), so that the contact-type power supply module 120 may supply power only to the contact-type communications module 140 and the storage control module 150, but does not supply power to the wireless communications module 130.

In this case, the contact-type power supply module 120 is not connected to the wireless communications module 130, so that, for example, the wireless communications module is not enabled when the contact-type external device reads/writes data in the memory card 100 in a case in which the wireless power supply module does not receive power supply, that is, other external devices capable of performing UWB wireless communication cannot perform reading/writing on or view the memory card 100, so as to improve security of the memory card 100 of this embodiment of the present invention.

Similarly, in this embodiment of the present invention, the wireless power supply module 110 may be electrically connected to the wireless communications module 120 and the storage control module 150 (in other words, the wireless power supply module 110 can supply power to the wireless communications module 120 and the storage control module 150), the wireless communications module 120 is in communication connection with the storage control module 150 (in other words, the wireless communications module 120 can communicate with the storage control module 150), and the wireless power supply module 110 may supply power only to the wireless communications module 120 and the storage control module 150, but does not supply power to the contact-type communications module 140.

### Structure 2

Optionally, in this embodiment of the present invention, the wireless communications module is further connected to the contact-type power supply module, and is further configured to perform wireless communication with the first wireless external device by using the ultra-wideband impulse radio and by using the third power in the first time period, to transmit the first read/write instruction and the first data.

Specifically, as shown in FIG. 2, in this embodiment of the present invention, the contact-type power supply module 120 may be connected to the wireless communications module 130 (in other words, the contact-type power supply module 120 can supply power to the wireless communications module 130), so that the contact-type power supply module 120 may supply power to both the contact-type communications module 140 and the wireless communications module 130.

The wireless communications module 130 is electrically connected to the two power supply modules, namely the contact-type power supply module 120 and the wireless power supply module 110, so that, for example, when the wireless communications module 130 receives the power supply from the external device A (an example of the first wireless external device) by using the wireless power supply module 110, to perform data transmission for the external device A, the wireless communications module 130 can receive power supply from an external device C (an example of the second contact-type external device) by using the contact-type power supply module 120. In this case, the wireless communications module 130 may perform data transmission by using the power provided by the external device A or power provided by the external device C, and in other words, the storage control module 150 may instruct (control) the wireless communications module 130 to perform data transmission by using the power provided by the external device A or the power provided by the external device C.

Therefore, for the wireless communications module 130, the contact-type power supply module 120 and the wireless power supply module 110 may work in an active/standby mode, that is, the wireless communications module 130 may use any one of the contact-type power supply module 120 and the wireless power supply module 110 as an active power supply module, and use the other module as a standby power supply module, so as to further ensure data transmission of the wireless communications module 130, and improve reliability of the memory card of the present invention.

In a method for selecting the active power supply module, for example, when data transmission for the external device A is performed, and in a case in which the power supply from the external device C is obtained in a transmission process, the wireless power supply module 110 that obtains the power from the external device A may be used as the active power supply module. Data for the external device A is transmitted, so that a possibility of actively removing the power supply by the external device A is low before data transmission is completed. Therefore, performing of the data reading/writing operation can be ensured.

Similarly, in this embodiment of the present invention, the storage control module 150 is electrically connected to the two power supply modules, namely the contact-type power supply module 120 and the wireless power supply module 110, so that, for example, when receiving the power supply from the external device A by using the wireless power supply module 110 to perform a data reading/writing operation for the external device A, the storage control module 150 can receive the power supply from the external device C. In this case, the storage control module 150 may perform the data reading/writing operation by using the power provided by the external device A or the power provided by the external device C.

Therefore, for the storage control module 150, the contact-type power supply module 120 and the wireless power supply module 110 may work in an active/standby mode, that is, the storage control module 150 may use any one of the contact-type power supply module 120 and the wireless power supply module 110 as an active power supply module, and use the other module as a standby power supply module, so as to further ensure data reading/writing of the storage control module 150, and improve reliability of the memory card of the present invention.

In a method for selecting the active power supply module, for example, when the data reading/writing operation for the external device A is performed, and in a case in which the power supply from the external device C is obtained in a reading/writing process, the wireless power supply module 110 that obtains the power from the external device A may be used as the active power supply module. Data for the external device A is read/written, so that a possibility of actively removing the power supply by the external device A is low before data reading/writing is completed. Therefore, performing of the data reading/writing operation can be ensured.

Optionally, the storage control module is further configured to: when the first power and the third power are detected at the same time and the third power reaches a preset first threshold, determine to read or write, according to the first read/write instruction by using the third power in the first time period, the first data in the storage medium.

Furthermore, the storage control module is further configured to: when the first power and the third power are detected at the same time and the third power reaches the preset first threshold, instruct the wireless communications module to perform wireless communication with the first wireless external device by using the ultra-wideband impulse radio and by using the third power, to transmit the first read/write instruction and the first data.

In this embodiment of the present invention, the storage control module 150 may have a power supply rectification function. Specifically, for example, when the data reading/writing operation is performed for the external device A, there is a case in which the power supply from the external device C is obtained in the reading/writing process, and if the power supply from C reaches, for example, a voltage of the USB interface (for example, about 5.0 V, that is, an example of the first threshold), the storage control module 150 may determine that the power supply from the contact-type power supply module 120 is stable, therefore may perform a data storage operation by using the power supply (an example of the third power) from the contact-type power supply module 120, and may instruct (control) the wireless communications module 130 to perform data transmission by using the power supply from the contact-type power supply module 120.

In this way, because the relatively unstable wireless power supply can be replaced with the contact-type power supply that is more stable, the reliability of the memory card of the present invention can be further improved.

It should be understood that, the specific value listed above as the first threshold is only for exemplary description, but the present invention is not limited thereto, and any value that can indicate that the memory card can obtain stable power supply and a type of the value both fall within the protection scope of the present invention. For example, the first threshold may also be any value ranging from 4.75 V to 5.25 V, or the first threshold may also be a fluctuation range (for example, 4.75 V to 5.25 V) of a voltage within a specified time, that is, if the voltage within a preset time fluctuates in the range of the first threshold, it may be determined that the voltage is stable.

Optionally, the storage control module is further configured to: when the first power and the third power are detected at the same time and the third power reaches the first threshold, prohibit the wireless power supply module from receiving the wireless power supply from the first wireless external device in the first time period.

Specifically, for example, when the data reading/writing operation for the external device A is being performed, there is a case in which the power supply from the external device C is obtained in the reading/writing process, and if the power supply from C reaches, for example, the voltage of the USB interface (for example, approximately 5.0 V, that is, an example of the first threshold), the storage control module 150 may determine that the power supply from the contact-type power supply module 120 is stable, therefore may perform the data storage operation by using the power supply (an example of the third power) from the contact-type power supply module 120, and may instruct (control) the wireless communications module 130 to perform data transmission by using the power supply from the contact-type power supply module 120. Furthermore, the wireless power supply module 110 may be disabled, that is, the wireless power supply module 110 does not receive the power supply from the external device A, so as to reduce a burden on the wireless power supply module 110, and prolong the service life of the wireless power supply module 110.

In addition, as indicated by a dash line in FIG. 2, the wireless power supply module 110 may be electrically connected to the contact-type communications module 140, or may not be electrically connected to the contact-type communications module 140.

### Structure 3

Optionally, the contact-type communications module is further connected to the wireless power supply module, and is further configured to perform contact-type communication with the first contact-type external device by using the fourth power in the second time period, to transmit the second read/write instruction and the second data.

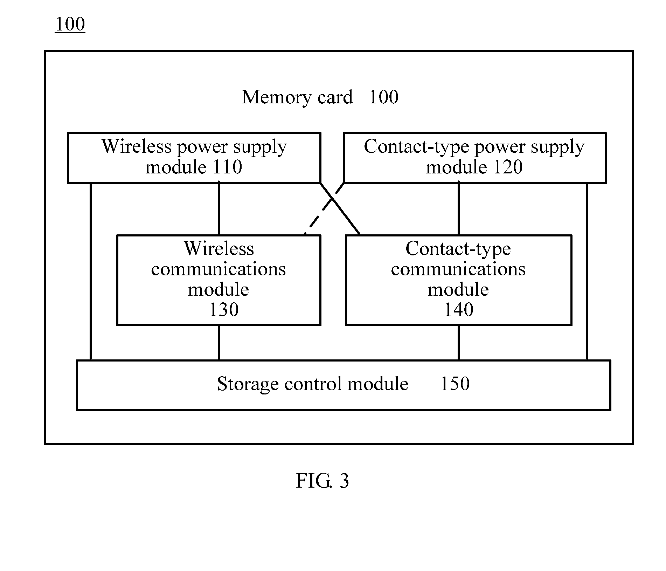

Specifically, as shown in FIG. 3, in this embodiment of the present invention, the wireless power supply module 110 may be connected to the contact-type communications module 140 (in other words, the wireless power supply module 110 can supply power to the contact-type communications module 140), so that the wireless power supply module 110 may supply power to both the contact-type communications module 140 and the wireless communications module 130.

The contact-type communications module 140 is electrically connected to the two power supply modules, namely the contact-type power supply module 120 and the wireless power supply module 110, so that, for example, when the contact-type communications module 140 receives the power supply from the external device B (an example of the first contact-type external device) by using the contact-type power supply module 120, to perform data transmission for the external device B, the contact-type communications module 140 can receive power supply from an external device D (an example of the second wireless external device) by using the wireless power supply module 110. In this case, the contact-type communications module 140 may perform data transmission by using the power provided by the external device B or power provided by the external device D, and in other words, the storage control module 150 may instruct (control) the contact-type communications module 140 to perform data transmission by using the power provided by the external device D or the power provided by the external device B.

Therefore, for the contact-type communications module 140, the contact-type power supply module 120 and the wireless power supply module 110 may work in an active/standby mode, that is, the contact-type communications module 140 may use any one of the contact-type power supply module 120 and the wireless power supply module 110 as an active power supply module, and use the other module as a standby power supply module, so as to further ensure data transmission of the contact-type communications module 140, and improve reliability of the memory card of the present invention.

In a method for selecting the active power supply module, for example, when data transmission for the external device B is being performed, and in a case in which the power supply from the external device D is obtained in a transmission process, the contact-type power supply module 120 that obtains the power from the external device B may be used as the active power supply module. Data for the external device B is transmitted, so that a possibility of actively removing the power supply by the external device B is low before data transmission is completed. Therefore, performing of the data reading/writing operation can be ensured.

Similarly, in this embodiment of the present invention, the storage control module 150 is electrically connected to the two power supply modules, namely the contact-type power supply module 120 and the wireless power supply module 110, so that, for example, when receiving the power supply from the external device B by using the contact-type power supply module 120 to perform data transmission for the external device B, the storage control module 150 can receive the power supply from the external device D by using the wireless power supply module 110. In this case, the storage control module 150 may perform the data transmission by using the power provided by the external device B or the power provided by the external device D.

Therefore, for the storage control module 150, the contact-type power supply module 120 and the wireless power supply module 110 may work in an active/standby mode, that is, the contact-type communications module 140 may use any one of the contact-type power supply module 120 and the wireless power supply module 110 as an active power supply module, and use the other module as a standby power supply module, so as to further ensure data transmission of the contact-type communications module 140, and improve reliability of the memory card of the present invention.

In a method for selecting the active power supply module, for example, when data transmission for the external device B is being performed, and in a case in which the power supply from the external device D is obtained in a transmission process, the contact-type power supply module 120 that obtains the power from the external device B may be used as the active power supply module. Data for the external device B is transmitted, so that a possibility of actively removing the power supply by the external device B is low before data transmission is completed Therefore, performing of the data reading/writing operation can be ensured.

In addition, as indicated by a dash line in FIG. 3, the contact-type power supply module 120 may be electrically connected to the wireless communications module 130, or may not be electrically connected to the wireless communications module 130.

In this embodiment of the present invention, because there are two communications modules, namely the receiving contact-type communications module 140 and the wireless communications module 130, there may be a case in which the storage control module 150 performs a data reading/writing process for an external device and receives a read/write instruction from another device at the same time. Therefore, the storage control module 150 of this embodiment of the present invention may further be capable of logic switching. A process of the logic switching (a data storage operation) is described below in detail.

Optionally, in this embodiment of the present invention, the storage control module is further configured to: if the first power is first detected in the first time period, prohibit the contact-type communications module from performing contact-type communication with the second contact-type external device in the first time period.

Furthermore, the storage control module is further configured to: if the second power is first detected in the second time period, prohibit the wireless communications module from performing wireless communication with the second wireless external device by using the ultra-wideband impulse radio in the second time period.

Specifically, in this embodiment of the present invention, the storage control module 150 may implement the logic switching by controlling enabling and disabling of the wireless power supply module 110, the contact-type power supply module 120, the wireless communications module 130, and the contact-type communications module 140, that is, data reading/writing and transmission of a read/write instruction only for one external device are performed at one moment.

For example, if the power supply from the wireless power supply module 110 is first detected, it can be determined that the external device A (an example of the first wireless external device) needs to read/write data, so that the contact-type power supply module 120 and the contact-type communications module 140 may be disabled (in other words, actions of the contact-type power supply module 120 and the contact-type communications module 140 are prohibited), and therefore, in the data reading/writing process for the external device A (in the first time period), data reading/writing for an external device G (an example of the second contact-type external device) is not performed, so as to avoid a read/write error caused by performing data reading/writing on multiple external devices at the same time, thereby further improving reliability of the memory card 100 of the present invention.

Similarly, if the power supply from the contact-type power supply module 120 is first detected, it can be determined that the external device B (an example of the first contact-type external device) needs to read/write data, so that the wireless power supply module 110 and the wireless communications module 130 may be disabled (in other words, actions of the wireless power supply module 110 and the wireless communications module 130 are prohibited), and therefore, in the data reading/writing process for the external device B (in the first time period), data reading/writing for an external device H (an example of the second wireless external device) is not performed, so as to avoid a read/write error caused by performing data reading/writing on multiple external devices at the same time, thereby further improving reliability of the memory card 100 of the present invention.

Optionally,
the storage control module is further configured to: when receiving a third read/write instruction from an external device except the first wireless external device before completing reading or writing data corresponding to the first read/write instruction, after completing reading or writing data corresponding to the first read/write instruction, read or write data according to the third read/write instruction; or
pause reading or writing data corresponding to the first read/write instruction, and continue reading or writing data corresponding to the third read/write instruction after completing reading or writing data corresponding to the third read/write instruction; or
cancel reading or writing data corresponding to the first read/write instruction, and read or write data according to the third read/write instruction; or
send a first operation instruction request to the first wireless external device, receive a first operation instruction response sent by the first wireless external device, and read or write data according to the first operation instruction response.

Furthermore, the storage control module is further configured to: when receiving a fourth read/write instruction from an external device except the first contact-type external device before completing reading or writing data corresponding to the second read/write instruction, after completing reading or writing data corresponding to the second read/write instruction, read or write data according to the fourth read/write instruction; or
pause reading or writing data corresponding to the second read/write instruction, and continue reading or writing data corresponding to the second read/write instruction after completing reading or writing data corresponding to the fourth read/write instruction; or
cancel reading or writing data corresponding to the second read/write instruction, and read or write data according to the fourth read/write instruction; or
send a second operation instruction request to the first contact-type external device, receive a second operation instruction response sent by the first contact-type external device, and read or write data according to the second operation instruction response.

Specifically, in this embodiment of the present invention, if the storage control module 150, when performing, according to a read/write instruction X from an external device E (a wireless external device or a contact-type external device), a data reading/writing operation for the external device E, receives (by using the wireless communications module 130 or the contact-type communications module 140) a read/write instruction Y from an external device F (a wireless external device or a contact-type external device),
for example, the storage control module 150 may continue performing the data reading/writing operation for the external device E. After completing reading or writing data operation, the storage control module 150 may read or write data according to the read/write instruction Y after completing reading or writing data; for example, it may be detected whether power supply from the external device F can be received, and if it is not detected, it does not need to perform the data reading/writing operation according to the read/write instruction Y; for another example, query information may further be sent to the external device F (by using the wireless communications module 130 or the contact-type communications module 140), to notify the external device F that data reading/writing can be performed, and an operation is performed according to a response of the external device F; for example, if the response is obtained, the data reading/writing operation is performed according to the read/write instruction Y or a read/write instruction Z newly sent by the external device F, and if no response is obtained within a specified time, the power supply may be cut off, and the data reading/writing operation may be canceled.

Alternatively, the storage control module 150 may pause reading or writing data operation for the external device E, immediately perform the data reading/writing operation according to the read/write instruction Y, and after completing reading or writing data operation, continue performing the data reading/writing operation for the external device E; for example, it may be detected whether power supply from the external device E can be received, and if it is not detected, it does not need to perform the data reading/writing operation; for another example, query information may further be sent to the external device E (by using the wireless communications module 130 or the contact-type communications module 140), to notify the external device E that data reading/writing can be performed, and an operation is performed according to a response of the external device E; for example, if the response is obtained, the data reading/writing operation is performed according to the read/write instruction X or a read/write instruction W newly sent by the external device E, and if no response is obtained within a specified time, the power supply may be cut off, and the data reading/writing operation may be canceled.

Alternatively, the storage control module 150 may cancel reading or writing data operation for the external device E, and immediately perform the data reading/writing operation according to the read/write instruction Y.

Alternatively, the storage control module 150 may send a query message (an operation instruction request) to the external device E. For example, the external device E may be queried about whether a current data storage operation can be paused (an example of the operation instruction request). If a response from the external device E is obtained, for example, the external device E (specifically, a user of the external device E) agrees to pause the data storage operation (an example of the operation instruction response), the storage control module 150 may perform the data reading/writing operation according to the read/write instruction Y, and after completing reading or writing data operation, continue performing the data reading/writing operation for the external device E.

It should be understood that, the external device E may be a wireless external device (for example, the first wireless external device), and may also be a contact-type external device (for example, the first contact-type external device).

It should be understood that, the operation instruction request, the operation instruction response, and the corresponding operations that are listed above are only for exemplary description, but the present invention is not limited thereto.

In this way, by using the method and process of logic switching, a read/write error caused by performing data reading/writing on multiple external devices at the same time can be avoided, thereby further improving reliability of the memory card 100 of the present invention. Furthermore, by use of interaction with an external device that is performing data reading/writing, an operation may be performed according to an instruction from a user. This improves human-centered performance of the memory card 100 of the present invention, and further improves user experience.

It should be understood that the methods and processes of logic switching that are listed above are only for exemplary description, but the present invention is not limited thereto, and for example, interaction may be performed with an external device that sends a read/write instruction last.

It should be understood that, in this embodiment of the present invention, power supply time may be inconsistent with time for reading/writing data for a same external device, that is, the memory card performs data reading/writing only for one external device in one time period, but another external device may supply power to the memory card in this time period. Furthermore, the time periods for performing data reading/writing, which are listed above and include the first time period and the second time period, may be continuous or discontinuous, but the present invention imposes no specific limitation. For example, during the logic switching, a time period in which data reading/writing is paused includes time for reading/writing data before the pause and time for reading/writing data after the pause, and furthermore, the pause may occur multiple times, but the present invention imposes no specific limitation.

It should be understood that, for ease of understanding and distinction, the second contact-type external device and the first contact-type external device are distinguished above, but, for example, when the first time period and the second time period overlap, the first contact-type external device and the first contact-type external device may also be a same external device, and similarly, the first wireless external device and the second wireless external device may also be a same external device.

Furthermore, the third read/write instruction and the first read/write instruction may be a same instruction. Similarly, the fourth read/write instruction and the first read/write instruction may be a same instruction.

According to a memory card of this embodiment of the present invention, the memory card has a wireless communications module and a contact-type communications module, and can transmit data to various terminal devices including a novel intelligent terminal that reads/writes data by using ultra-wideband impulse radio and a conventional terminal that reads/writes data by using contact-type communication, to implement data reading/writing, so as to expand an application scope of the memory card, that is, to facilitate promotion and popularity of the ultra-wideband impulse radio transmission technology, and ensure use of a conventional intelligent terminal. Furthermore, data from the wireless communications module and data from the contact-type communications module are stored in a same storage control module, so that a same storage space can be used for data reading/writing of both a novel intelligent terminal and a conventional intelligent terminal in different time periods, so as to implement data exchange between the novel intelligent terminal and the conventional intelligent terminal, thereby improving user experience.

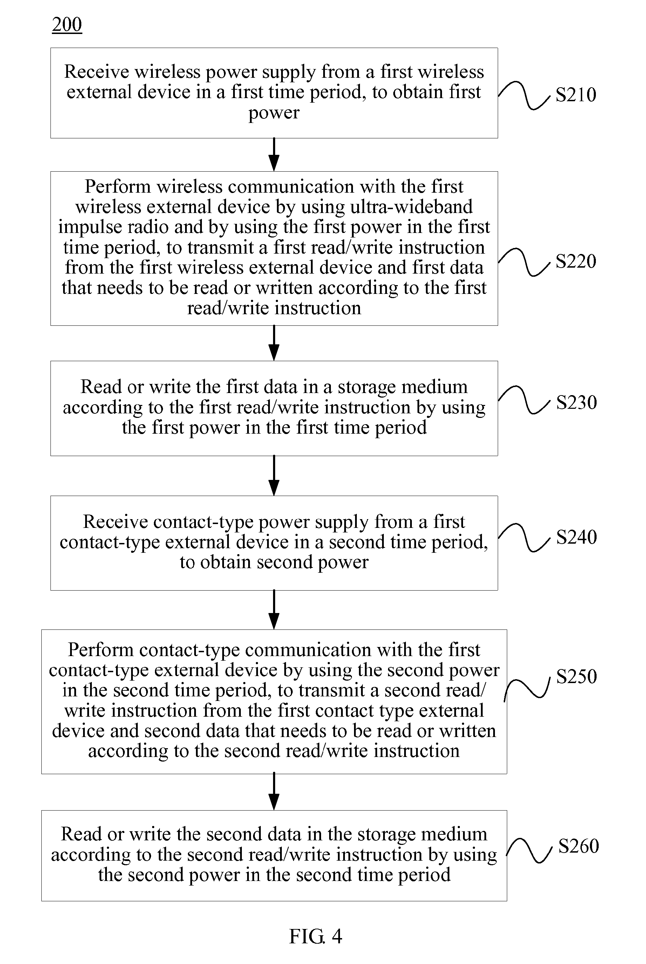

The function and structure of the memory card according to this embodiment of the present invention are described above in detail with reference to FIG. 1 to FIG. 3, and a data storage method according to an embodiment of the present invention is described below in detail with reference to FIG. 4. FIG. 4 shows a schematic process of the data storage method 200 according to this embodiment of the present invention. As shown in FIG. 4, the method 200 includes:

S210: Receive wireless power supply from a first wireless external device in a first time period, to obtain first power.

S220: Perform wireless communication with the first wireless external device by using ultra-wideband impulse radio and by using the first power in the first time period, to transmit a first read/write instruction from the first wireless external device and first data that needs to be read or written according to the first read/write instruction.

S230: Read or write the first data from or into a storage medium according to the first read/write instruction by using the first power in the first time period.

S240: Receive contact-type power supply from a first contact-type external device in a second time period, to obtain second power.

S250: Perform contact-type communication with the first contact-type external device by using the second power in the second time period, to transmit a second read/write instruction from the first contact-type external device and second data that needs to be read or written according to the second read/write instruction.

S260: Read or write the second data from or into the storage medium according to the second read/write instruction by using the second power in the second time period.

Optionally, the method further includes:
receiving contact-type power supply from a second contact-type external device in the first time period, to obtain third power.

Optionally, the performing wireless communication with the first wireless external device by using ultra-wideband impulse radio and by using the first power in the first time period includes:
performing wireless communication with the first wireless external device by using the ultra-wideband impulse radio and by using the third power in the first time period.

Optionally, the performing wireless communication with the first wireless external device by using the ultra-wideband impulse radio and by using the third power in the first time period includes:
when the first power and the third power are detected at the same time and the third power reaches a preset first threshold, performing wireless communication with the first wireless external device by using the ultra-wideband impulse radio and by using the third power in the first time period, to transmit the first read/write instruction and the first data.

Optionally, the reading or writing the first data from or into a storage medium according to the first read/write instruction by using the first power in the first time period includes:
reading or writing the first data from or into the storage medium according to the first read/write instruction by using the third power in the first time period.

Optionally, the reading or writing the first data from or into the storage medium according to the first read/write instruction by using the third power in the first time period includes:
when the first power and the third power are detected at the same time and the third power reaches the preset first threshold, reading or writing the first data from or into the storage medium according to the first read/write instruction by using the third power in the first time period.

Optionally, the method further includes:
when the first power and the third power are detected at the same time and the third power reaches the preset first threshold, prohibiting the wireless power supply from the first wireless external device from being received in the first time period.

Optionally, the method further includes:
if the first power is first detected in the first time period, prohibiting the contact-type communication from being performed with the second contact-type external device in the first time period.

Optionally, the method further includes:
receiving wireless power supply from a second wireless external device in the second time period, to obtain fourth power.

Optionally, the performing contact-type communication with the first contact-type external device by using the second power in the second time period includes:
performing contact-type communication with the first contact-type external device by using the fourth power in the second time period.

Optionally, the reading or writing the second data from or into the storage medium according to the second read/write instruction by using the second power in the second time period includes:
reading or writing the second data from or into the storage medium according to the second read/write instruction by using the fourth power in the second time period.

Optionally, the method further includes:
if the second power is first detected in the second time period, prohibiting the wireless communication from being performed with the second wireless external device by using the ultra-wideband impulse radio in the second time period.

Optionally, if a third read/write instruction from an external device except the first wireless external device is received before reading or writing data corresponding to the first read/write instruction is completed, the reading or writing the first data from or into a storage medium according to the first read/write instruction includes:
after completing reading or writing data corresponding to the first read/write instruction, performing data reading/writing according to the third read/write instruction; or
pausing reading or writing data corresponding to the first read/write instruction, and continue reading or writing data corresponding to the third read/write instruction after completing reading or writing data corresponding to the third read/write instruction; or
canceling reading or writing data corresponding to the first read/write instruction, and performing data reading/writing according to the third read/write instruction; or
sending a first operation instruction request to the first wireless external device, receiving a first operation instruction response sent by the first wireless external device, and performing data reading/writing according to the first operation instruction response.

Optionally, if a fourth read/write instruction from an external device except the first contact-type external device is received before reading or writing data corresponding to the second read/write instruction is completed, the reading or writing the second data from or into the storage medium according to the second read/write instruction includes:
after completing reading or writing data corresponding to the second read/write instruction, performing data reading/writing according to the fourth read/write instruction; or
pausing reading or writing data corresponding to the second read/write instruction, and continue reading or writing data corresponding to the second read/write instruction after completing reading or writing data corresponding to the fourth read/write instruction; or
canceling reading or writing data corresponding to the second read/write instruction, and performing data reading/writing according to the fourth read/write instruction; or
sending a second operation instruction request to the first contact-type external device, receiving a second operation instruction response sent by the first contact-type external device, and performing data reading/writing according to the second operation instruction response.

An entity for implementing the data storage method 200 according to this embodiment of the present invention may correspond to the memory card 100 in the method of this embodiment of the present invention, and units, that is, modules, in the data storage method 200 and the foregoing other operations and/or functions are separately implemented by corresponding modules that implement the memory card 100 in FIG. 1, which are, for brevity, not described herein again.

According to a data storage method of this embodiment of the present invention in this embodiment of the present invention, a memory card has a wireless communications module and a contact-type communications module, and can transmit data to various terminal devices including a novel intelligent terminal that reads/writes data by using ultra-wideband impulse radio and a conventional terminal that reads/writes data by using contact-type communication, to implement data reading/writing, so as to expand an application scope of the memory card, that is, to facilitate promotion and popularity of the ultra-wideband impulse radio transmission technology, and ensure use of a conventional intelligent terminal. Furthermore, data from the wireless communications module and data from the contact-type communications module are stored in a same storage control module, so that a same storage space can be used for data reading/writing of both a novel intelligent terminal and a conventional intelligent terminal in different time periods, so as to implement data exchange between the novel intelligent terminal and the conventional intelligent terminal, thereby improving user experience.

It should be understood that, the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that sequence numbers of the foregoing processes do not mean execution sequences in various embodiments of the present invention. The execution sequences of the processes should be determined according to functions and internal logic of the processes, and should not be construed as any limitation on the implementation processes of the embodiments of the present invention.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of the present invention essentially, or the part contributing to the prior art, or a part of the technical solutions may be implemented in a form of a software product. The software product is stored in a storage medium, and includes several instructions for instructing a computer device (which may be a personal computer, a server, or a network device) to perform all or a part of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A memory card, wherein the memory card comprises:
a wireless power supply module, configured to receive wireless power supply from a first wireless external device in a first time period, to obtain first power;
a contact-type power supply module, configured to receive contact-type power supply from a first contact-type external device in a second time period, to obtain second power;
a wireless communications module, connected to the wireless power supply module, and configured to perform wireless communication with the first wireless external device by using ultra-wideband impulse radio and by using the first power in the first time period, to transmit a first read/write instruction from the first wireless external device and first data that needs to be read or written according to the first read/write instruction;
a contact-type communications module, connected to the contact-type power supply module, and configured to perform contact-type communication with the first contact-type external device by using the second power in the second time period, to transmit a second read/write instruction from the first contact-type external device and second data that needs to be read or written according to the second read/write instruction; and
a storage control module, connected to the wireless power supply module, the wireless communications module, the contact-type power supply module, and the contact-type communications module, and configured to read or write the first data from or into a storage medium according to the first read/write instruction by using the first power in the first time period, and
read or write the second data from or into the storage medium according to the second read/write instruction by using the second power in the second time period.

2. The memory card according to claim 1, wherein the contact-type power supply module is further configured to receive contact-type power supply from a second contact-type external device in the first time period, to obtain third power.

3. The memory card according to claim 2, wherein the storage control module is further configured to read or write the first data from or into the storage medium according to the first read/write instruction by using the third power in the first time period.

4. The memory card according to claim 3, wherein the storage control module is further configured to:
when the first power and the third power are detected at the same time and the third power reaches a preset first threshold, determine to read or write the first data from or into the storage medium according to the first read/write instruction by using the third power in the first time period.

5. The memory card according to any one of claims 2 to 4, wherein the wireless communications module is further connected to the contact-type power supply module, and is further configured to perform wireless communication with the first wireless external device by using the ultra-wideband impulse radio and by using the third power in the first time period, to transmit the first read/write instruction and the first data.

6. The memory card according to claim 5, wherein the storage control module is further configured to: when the first power and the third power are detected at the same time and the third power reaches the preset first threshold, instruct the wireless communications module to perform wireless communication with the first wireless external device by using the ultra-wideband impulse radio and by using the third power, to transmit the first read/write instruction and the first data.

7. The memory card according to any one of claims 2 to 6, wherein the storage control module is further configured to: when the first power and the third power are detected at the same time and the third power reaches the preset first threshold, prohibit the wireless power supply module from receiving the wireless power supply from the first wireless external device in the first time period.

8. The memory card according to any one of claims 2 to 7, wherein the storage control module is further configured to: if the first power is first detected in the first time period, prohibit the contact-type communications module from performing contact-type communication with the second contact-type external device in the first time period.

9. The memory card according to any one of claims 1 to 8, wherein the wireless power supply module is further configured to receive wireless power supply from a second wireless external device in the second time period, to obtain fourth power.

10. The memory card according to claim 9, wherein the storage control module is further configured to read or write the second data from or into the storage medium according to the second read/write instruction by using the fourth power in the second time period.

11. The memory card according to claim 9 or 10, wherein the contact-type communications module is further connected to the wireless power supply module, and is further configured to perform contact-type communication with the first contact-type external device by using the fourth power in the second time period, to transmit the second read/write instruction and the second data.

12. The memory card according to any one of claims 9 to 11, wherein the storage control module is further configured to: if the second power is first detected in the second time period, prohibit the wireless communications module from performing wireless communication with the second wireless external device by using the ultra-wideband impulse radio in the second time period.

13. The memory card according to any one of claims 1 to 10, wherein the storage control module is further configured to: when receiving a third read/write instruction from an external device except the first wireless external device before completing reading or writing data corresponding to the first read/write instruction, after completing reading or writing data corresponding to the first read/write instruction, read or write data according to the third read/write instruction; or
pause reading or writing data corresponding to the first read/write instruction, and continue reading or writing data corresponding to the third read/write instruction after completing reading or writing data corresponding to the third read/write instruction; or
cancel reading or writing data corresponding to the first read/write instruction, and read or write data according to the third read/write instruction; or
send a first operation instruction request to the first wireless external device, receive a first operation instruction response sent by the first wireless external device, and read or write data according to the first operation instruction response.

14. The memory card according to any one of claims 1 to 10, wherein the storage control module is further configured to: when receiving a fourth read/write instruction from an external device except the first contact-type external device before completing reading or writing data corresponding to the second read/write instruction, after completing reading or writing data corresponding to the second read/write instruction, read or write data according to the fourth read/write instruction; or
pause reading or writing data corresponding to the second read/write instruction, and continue reading or writing data corresponding to the second read/write instruction after completing reading or writing data corresponding to the fourth read/write instruction; or
cancel reading or writing data corresponding to the second read/write instruction, and read or write data according to the fourth read/write instruction; or
send a second operation instruction request to the first contact-type external device, receive a second operation instruction response sent by the first contact-type external device, and read or write data according to the second operation instruction response.

15. The memory card according to any one of claims 1 to 14, wherein the contact-type power supply module and the contact-type communications module can be connected to the contact-type external device by using at least one interface, and the at least one interface comprises:
a secure digital SD memory card interface, a compact flash CF card interface, a multimedia card MMC interface, a Universal Serial Bus USB interface, a 1394 interface, a subscriber identity module SIM card interface, a user identity module UIM card interface, and a universal subscriber identity module USIM card interface.

16. A data storage method, wherein the method comprises:
receiving wireless power supply from a first wireless external device in a first time period, to obtain first power;
performing wireless communication with the first wireless external device by using ultra-wideband impulse radio and by using the first power in the first time period, to transmit a first read/write instruction from the first wireless external device and first data that needs to be read or written according to the first read/write instruction;
reading or writing the first data from or into a storage medium according to the first read/write instruction by using the first power in the first time period;
receiving contact-type power supply from a first contact-type external device in a second time period, to obtain second power;
performing contact-type communication with the first contact-type external device by using the second power in the second time period, to transmit a second read/write instruction from the first contact-type external device and second data that needs to be read or written according to the second read/write instruction; and
reading or writing the second data from or into the storage medium according to the second read/write instruction by using the second power in the second time period.

17. The method according to claim 16, wherein the method further comprises:
receiving contact-type power supply from a second contact-type external device in the first time period, to obtain third power.

18. The method according to claim 17, wherein the performing wireless communication with the first wireless external device by using ultra-wideband impulse radio and by using the first power in the first time period comprises:
performing wireless communication with the first wireless external device by using the ultra-wideband impulse radio and by using the third power in the first time period.

19. The method according to claim 18, wherein the performing wireless communication with the first wireless external device by using the ultra-wideband impulse radio and by using the third power in the first time period comprises:
when the first power and the third power are detected at the same time and the third power reaches a preset first threshold, performing wireless communication with the first wireless external device by using the ultra-wideband impulse radio and by using the third power in the first time period, to transmit the first read/write instruction and the first data.

20. The method according to any one of claims 17 to 19, wherein the reading or writing the first data from or into a storage medium according to the first read/write instruction by using the first power in the first time period comprises:
reading or writing the first data from or into the storage medium according to the first read/write instruction by using the third power in the first time period.

21. The method according to claim 20, wherein the reading or writing the first data from or into the storage medium according to the first read/write instruction by using the third power in the first time period comprises:
when the first power and the third power are detected at the same time and the third power reaches the preset first threshold, reading or writing the first data from or into the storage medium according to the first read/write instruction by using the third power in the first time period.

22. The method according to any one of claims 17 to 21, wherein the method further comprises:
when the first power and the third power are detected at the same time and the third power reaches the preset first threshold, prohibiting the wireless power supply from the first wireless external device from being received in the first time period.

23. The method according to any one of claims 17 to 22, wherein the method further comprises:
if the first power is first detected in the first time period, prohibiting contact-type communication from being performed with the second contact-type external device in the first time period.

24. The method according to any one of claims 16 to 23, wherein the method further comprises:
receiving wireless power supply from a second wireless external device in the second time period, to obtain fourth power.

25. The method according to claim 24, wherein the performing contact-type communication with the first contact-type external device by using the second power in the second time period comprises:
performing contact-type communication with the first contact-type external device by using the fourth power in the second time period.

26. The method according to claim 24 or 25, wherein the reading or writing the second data from or into the storage medium according to the second read/write instruction by using the second power in the second time period comprises:
reading or writing the second data from or into the storage medium according to the second read/write instruction by using the fourth power in the second time period.

27. The method according to any one of claims 24 to 26, wherein the method further comprises:
if the second power is first detected in the second time period, prohibiting wireless communication from being performed with the second wireless external device by using the ultra-wideband impulse radio in the second time period.

28. The method according to any one of claims 16 to 27, wherein if a third read/write instruction from an external device except the first wireless external device is received before reading or writing data, corresponding to the first read/write instruction is completed, the reading or writing the first data from or into a storage medium according to the first read/write instruction comprises:
after completing reading or writing data corresponding to the first read/write instruction, performing data reading/writing according to the third read/write instruction; or
pausing reading or writing data corresponding to the first read/write instruction, and continue reading or writing data corresponding to the third read/write instruction after completing reading or writing data corresponding to the third read/write instruction; or
canceling reading or writing data corresponding to the first read/write instruction, and performing data reading/writing according to the third read/write instruction; or
sending a first operation instruction request to the first wireless external device, receiving a first operation instruction response sent by the first wireless external device, and performing data reading/writing according to the first operation instruction response.

29. The method according to any one of claims 16 to 27, wherein if a fourth read/write instruction from an external device except the first contact-type external device is received before reading or writing data reading/writing corresponding to the second read/write instruction is completed, the reading or writing the second data from or into the storage medium according to the second read/write instruction comprises:
after completing reading or writing data corresponding to the second read/write instruction, performing data reading/writing according to the fourth read/write instruction; or
pausing reading or writing data corresponding to the second read/write instruction, and continue reading or writing data corresponding to the second read/write instruction after completing reading or writing data corresponding to the fourth read/write instruction; or
canceling reading or writing data corresponding to the second read/write instruction, and performing data reading/writing according to the fourth read/write instruction; or
sending a second operation instruction request to the first contact-type external device, receiving a second operation instruction response sent by the first contact-type external device, and performing data reading/writing according to the second operation instruction response.
